# EUROPÄISCHE PATENTSCHRIFT

(11) **EP 3 983 213 B1**
(45) Veröffentlichungstag und Bekanntmachung des Hinweises auf die Patenterteilung: **04.12.2024**
(21) Anmeldenummer: 20724486.4
(22) Anmeldetag: 06.05.2020
(51) Int. Cl.: B29D 30/52, B29C 48/07, B29C 48/19, B29C 48/305, B29C 48/695

(54) **VERFAHREN ZUR HERSTELLUNG EINES FAHRZEUGLUFTREIFENS, VORRICHTUNG ZUM AUSFORMEN EINES ZWEI WINGKOMPONENTEN UND EINE ABLEITKOMPONENTE UMFASSENDEN KAUTSCHUKPROFILS UND VERWENDUNG DER VORRICHTUNG**
METHOD FOR MANUFACTURING A PNEUMATIC TYRE, APPARATUS FOR FORMING A RUBBER PROFILE COMRISING TWO WINGS AND A CONDUCTIVE PART AND USE OF THE APPARTUS
PROCÉDÉ DE FABRICATION DE PNEUMATIQUES DE VÉHICULE, APPAREIL POUR FORMER UN PROFILE EN CAOUTCHOUC AVEC DEUS AILES ET UNE PARTIE CONDUCTRICE ET UTILISATION DE L'APPAREIL

(30) Priorität: 17.06.2019 DE 102019208750
(43) Veröffentlichungstag der Anmeldung: 20.04.2022
(73) Patentinhaber: Continental Reifen Deutschland GmbH, 30175 Hannover (DE)
(72) Erfinder: SHARIFI, Monir, 30419 Hannover (DE); PFAFF, Florian, 30419 Hannover (DE)
(74) Vertreter: Continental Corporation
(86) Internationale Anmeldenummer: PCT/EP2020/062597
(87) Internationale Veröffentlichungsnummer: WO 2020/254035

(56) Entgegenhaltungen:
- EP-A2- 1 647 390
- WO-A1-2013/051930
- DE-A1- 10 119 066
- DE-A1- 102011 111 463
- DE-C1- 19 718 699
- JP-A- 2004 255 801
- US-A1- 2004 185 132
- US-A1- 2004 185 132

## Beschreibung

Die Erfindung betrifft ein Verfahren zur Herstellung eines Fahrzeugluftreifens. Die Erfindung betrifft auch eine Vorrichtung zum Ausformen eines zwei Wingkomponenten und eine Ableitkomponente umfassenden Kautschukprofils und die Verwendung der Vorrichtung.

In jüngerer Vergangenheit werden vermehrt Fahrzeugluftreifen mit einem immer höheren Anteil an Silica in der Laufstreifenmischung hergestellt und im Straßenverkehr eingesetzt.

Solche oder ähnliche Fahrzeugluftreifen haben den Nachteil, dass die Laufstreifenmischung nicht mehr elektrisch leitfähig genug ist und somit eine elektrostatische Aufladung des Fahrzeuges gegenüber der Fahrbahnoberfläche herbeiführt. Eine solche elektrostatische Aufladung kann sehr gefährlich sein, wenn keine ausreichende leitende Verbindung zur Erde oder zur Fahrbahnoberfläche besteht. Dies gilt insbesondere dann, wenn eine entsprechende Verbindung durch eine ein- oder aussteigende Person hergestellt wird oder durch das Einführen eines Tankschlauches für flüssiges oder gasförmiges Benzin, wie beispielsweise LPG.

Im Stand der Technik sind verschiedene Ansätze zur Vermeidung der elektrischen Aufladung von Luftreifen bekannt:
Die JP 2004 255801 A offenbart das Extrudieren von drei unterschiedlichen Kautschukmischungen zum Herstellen eines Reifens, wobei zwei Wingkomponenten und eine Ableitungskomponente aus einer Kautschukmischung extrudiert werden. Die Ableitungskomponente erstreckt sich von der Reifenaußenseite bis zu einer weiteren Kautschukmischung des Kautschukprofils und durchdringt diese nicht. Die Ableitungskomponente hat einen spezifischen elektrischen Widerstand von kleiner als 10¹⁰ Ohm.

Aus der EP 2 763 844 B1 ist ein Verfahren zum Herstellen eines antistatischen Fahrzeugreifens sowie ein derartiger Fahrzeugreifen bekannt. Der Fahrzeugreifen weist eine Gummimischung mit einem geringen elektrischen Widerstand auf, der sich von der Bodenkontaktfläche bis zur Verstärkungspackung erstreckt.

DE 19625091 A1 offenbart ein wässriges "Außentrennmittel für Luftreifen, das einen Fettalkohol-Polyglykolether und leitfähigen Ruß enthält" (s. Anspruch 1).

EP 0705722 A1 offenbart Kautschukzusammensetzung auf Wasserbasis, dadurch gekennzeichnet, dass sie eine Mischung aus (A) mindestens einem wässrigen Kautschuklatex, ausgewählt aus einem durch Emulsionspolymerisation hergestellten Styrol / Butadien-Copolymerkautschuklatex, einem durch Emulsionspolymerisation hergestellten Polybutadienlatex und einem cis-1,4-Polyisoprenlatex aus Naturkautschuk und (B) eine wässrige Dispersion von elektrisch leitendem Ruß, wobei der Ruß in einer Menge von 25 bis 200 phr vorliegt und wobei die Kautschuk / Ruß-Zusammensetzung, wenn sie getrocknet und schwefelgehärtet ist, einen Oberflächenwiderstand von weniger als etwa 10.000 Ohm aufweist (vgl. Anspruch 1).

US4310427 A offenbart Wasserreduzierbare Bandlagenschmiermittelzusammensetzung, bestehend im Wesentlichen aus 3 bis 12% einer Zinkseife einer langkettigen Fettsäure, 3 bis 12% eines langkettigen Fettsäurepartialesters von Sorbitan, wobei mindestens zwei der Hydroxylgruppen vorliegen nicht verestert; 20 bis 60% eines wasserlöslichen polymeren Schmiermittels, wobei das polymere Schmiermittel das Kondensationsprodukt von Alkylenglykolen oder Alkylenoxiden umfasst, die auf Alkylengruppen mit mehr als einem und weniger als vier Kohlenstoffatomen in der Alkylenkette und einem Molekulargewicht von mehr als begrenzt sind 1.000; und 30 bis 74% feinteiliger Glimmer (vgl. Anspruch 1).

US4857397 A offenbart ungehärteter Kautschukreifen mit einer Beschichtungszusammensetzung auf seiner Außenfläche, umfassend (a) 100 Gewichtsteile mindestens eines Kautschuks, ausgewählt aus Polybutadienkautschuk und Styrol / Butadien-Copolymerkautschuk; (b) ungefähr 300 bis ungefähr 1000 Gewichtsteile Ruß, gekennzeichnet durch eine Teilchengröße im Bereich von ungefähr 50 bis ungefähr 100 Nanometer (vgl. Anspruch 1).

Derartige Verfahren und Vorrichtungen sind weiterhin aus der DE 10 2011 111 463 A1, der US 2004/185 132 A1 und der DE 101 19 066 A1 bekannt.

Ein weiterer weit verbreiteter Ansatz zur Vermeidung der elektrostatischen Aufladung ist ein sogenannter BasePen in der mittleren Rille zur Erdung eingesetzt. Dieser ist beispielsweise auf der folgenden Internetseite beschrieben: https://www.meine-auto.info/auto-tipps/78-reifen-tipps/1236-reifen-lexikon.html.

Trotz dieser Weiterentwicklung hat sich in jüngster Zeit gezeigt, dass sich ein Großteil der eingesetzten Fahrzeugluftreifen mit einem immer höheren Anteil an Silica und mit so einem BasePen immer noch zu einer elektrischen Aufladung führt. Dies kann die vorstehend beschriebenen negativen Folgen haben.

Eine Aufgabe, die der Erfindung zugrunde liegt, besteht darin, ein Herstellungsverfahren bereitzustellen, welches die im Stand der Technik bekannten Nachteile nicht aufweist.

Gelöst wird diese Aufgabe erfindungsgemäß durch ein Verfahren zur Herstellung eines Fahrzeugluftreifens, umfassend die folgenden Schritte:
A) Extrudieren von mindestens zwei Kautschukmischungen, wobei die mindestens zwei Kautschukmischungen zumindest eine erste Kautschukmischung und eine zweite Kautschukmischung aufweisen,
Ausformen der in Schritt A) extrudierten Kautschukmischungen, bevorzugt mittels einer Vorrichtung wie nachstehend beschrieben oder wie nachstehend als bevorzugt beschrieben, zu einem Kautschukprofil zumindest umfassend eine Cap-Komponente, zwei Wingkomponenten und mindestens eine Ableitkomponente, wobei die in Schritt A) extrudierten Kautschukmischungen (2, 3) durch eine Führungseinheit (8) einer Vorrichtung (7) zum Ausformen eines zwei Wingkomponenten (5) und eine Ableitkomponente (4) umfassenden Vorkautschukprofils geleitet werden, wobei die erste Kautschukmischung (2) durch zwei Fließkanäle (10) für Wing-Komponenten (5) und durch mindestens einen Fließkanal (11) für eine Ableitkomponente (4) geführt wird und Ausformen des Vorkautschukprofils mittels einer Endform-Einheit (9) einer Vorrichtung (7) zum Ausformen eines zwei Wingkomponenten (5) und eine Ableitkomponente (4) umfassenden Kautschukprofils (1) zu einem Kautschukprofil (1) zumindest umfassend eine Cap-Komponente (6), zwei Wingkomponenten (5) und mindestens eine Ableitkomponente (3),
wobei die erste Kautschukmischung zu den zwei Wingkomponenten und der einen Ableitkomponente ausgeformt wird und einen spezifischen elektrischen Widerstand von höchstens 10¹² Ohm·cm bei 20 °C aufweist, wobei die zweite Kautschukmischung zu der Cap-Komponente ausgeformt wird,
B) Zuschneiden des ausgeformten Kautschukprofils und Auflegen des zugeschnitten Kautschukprofils mit weiteren Reifenbauteilen auf eine Reifenaufbautrommel,
C) Weiterverarbeiten des aufgelegten Kautschukprofils mit den besagten weiteren Reifenbauteilen auf der Reifenaufbautrommel, sodass ein Reifenrohling mit einem Laufstreifen mit mindestens zwei Wingkomponenten und einer Ableitkomponente entsteht,
D) Vulkanisieren des Reifenrohlings zu einem Fahrzeugluftreifen mit einem Laufstreifen umfassend mindestens zwei Wingkomponenten und eine Ableitkomponente, wobei die mindestens zwei Wingkomponenten und die Ableitkomponente aus der ersten Kautschukmischung bestehen.

Es war eine große Leistung der vorliegenden Erfindung herausgefunden zu haben, dass eine elektrostatische Aufladung moderner Reifen durch ein Herstellungsverfahren wie vorstehend beschrieben reduziert oder vermindert werden kann. Es wird vermutet, dass ein Großteil der elektrostatischen Aufladung aufgrund eines zu niedrig eingestellten Reifendrucks entsteht. Gemäß einer Studie der Überwachungsorganisation GTÜ weisen 25 % der Fahrzeugluftreifen der im Verkehr befindlichen Fahrzeuge einen falschen Luftdruck, häufig einen zu niedrigen Luftdruck, auf (vgl. Seite 102 im Buch "Das große Reifenbuch" von Klaus Peter Backfisch, Heel Verlag, 2006, ISBN-10: 3-89880-656-1).

Es wird angenommen, dass der zu niedrige Reifendruck dazu führt, dass mehr Druck auf die Schultern des Laufstreifens eines Fahrzeugluftreifens ausgeübt wird und somit nicht ausreichend Kontakt zwischen einer in der Reifenmitte befindlichen Ableitkomponente besteht, um der elektrostatischen Aufladung entgegenzuwirken. Durch die vorstehend beschriebene Herstellung eines Fahrzeugluftreifens wird daher eine elektrostatische Aufladung reduziert oder vermieden. Dies gilt auch dann, wenn die Cap des Laufstreifens nicht elektrisch leitfähig ist und der Reifeninnendruck zu niedrig ist. Dies vereinfacht den Einsatz von Fahrzeugluftreifen für einen durchschnittlichen Autofahrer ohne besondere Reifenkenntnisse in einem überdurchschnittlichen Maße und vermeidet somit im Stand der Technik bekannte Nachteile wie beispielsweise vorstehend beschrieben. Durch die vorliegende Erfindung ist es zudem möglich die Anzahl der zur Durchführung eines Extrusionsverfahrens nötigen Extruder zu reduzieren. Dies reduziert nicht nur die Herstellungskosten dauerhaft, sondern erreicht auch eine höhere Variabilität and Kautschukprofilgeometrien von existierenden Extruderanlagen, welche häufig konstruktionsbedingt nicht mit weiteren Maschinen oder Maschinenteilen kombiniert oder erweitert werden können.

Der Schritt C) eines erfindungsgemäßen Verfahrens ist insbesondere in der Offenlegungsschrift DE 102006030026 A1, insbesondere in den dortigen Absätzen [0020] bis [0025], in größerem Detail beschrieben.

Der Schritt D) eines erfindungsgemäßen Verfahrens ist insbesondere in der Offenlegungsschrift EP 2566686 A1, insbesondere in den dortigen Absätzen von Zeile 21, Seite 6 bis Zeile 2, Seite 8, oder EP 2756945 A1, insbesondere in den dortigen Absätzen [0018] bis [0021], in größerem Detail beschrieben.

Im Rahmen der vorliegenden Erfindung umfasst der Ausdruck "Kautschukprofil" insbesondere eine extrudierte und anschließend durch eine Endform-Einheit, beispielsweise eine Endschablone einer Extrusionseinheit, ausgeformte unvulkanisierte Kautschukmischung in Form eines Endlosstreifens.

Wie im Stand der Technik bekannt kann der Laufstreifen eines Fahrzeugluftreifens oder ein Kautschukprofil zur Herstellung eines Laufstreifens eines Fahrzeugluftreifens aus einer oder mehreren Base-, einer oder mehreren Cap- und mindestens zwei Wing-Komponenten bestehen. In neuerer Zeit wäre insbesondere Fahrzeugluftreifen mit einem Laufstreifen ohne Basekomponente hergestellt. Für solche Fahrzeugreifen ist der unzureichende BasePen-Ansatz wie vorstehend beschrieben nicht möglich.

Im Rahmen der vorliegenden Erfindung umfasst der Ausdruck "Kautschukkomponente" jede räumlich getrennte, im Laufstreifen des Fahrzeugluftreifens oder im ausgeformten Kautschukprofil angeordnete Komponente wie eine Cap-, Wing- oder Basekomponente. Eine Kautschukkomponente ist im Rahmen der vorliegenden Erfindung daher entweder eine unvulkanisierte Kautschukmischung, welche nach dem Mischen der Kautschukmischungskomponenten der Kautschukmischung entweder durch eine Endschablone oder durch eine Düse in eine definierte geometrische Form ausgeformt wurde, oder eine in eine bestimmte Geometrie vulkanisierte Kautschukmischung in dem final resultierenden Fahrzeugluftreifen.

Bevorzugt ist ein erfindungsgemäßes Verfahren wie vorstehend beschrieben oder wie vorstehend als bevorzugt beschrieben, wobei in Schritt B) keine der Kautschukmischungen zu einer Basekomponente in dem Kautschukprofil ausgeformt wird, wobei bevorzugt keine der Kautschukmischungen zu einer Basekomponente mit einem spezifischen elektrischen Widerstand von höchstens 10¹² Ohm·cm bei 20 °C ausgeformt wird, besonders bevorzugt von höchstens 10¹⁰ Ohm·cm bei 20 °C, ganz besonders bevorzugt von höchstens 10⁸ Ohm·cm bei 20 °C. Insbesondere für Fahrzeugluftreifen ohne Basekomponente und insbesondere ohne elektrisch leitfähige Basekomponente ist eine effektive Ableitung der elektrostatischen Aufladung besonders wichtig.

Bevorzugt ist ein erfindungsgemäßes Verfahren wie vorstehend beschrieben oder wie vorstehend als bevorzugt beschrieben, wobei der in Schritt E) resultierende Fahrzeugluftreifen ein Reifen mit einem Verhältnis von Reifenaufstandsfläche zur Seitenwandhöhe einer Seitenwand im Bereich von 7:1 bis 1:1 ist.

Aufgrund der höheren Belastung der Schultern des Laufstreifens eines vorstehend beschriebenen breiten Reifens kann keine ausreichende Ableitung der elektrostatischen Aufladung über ein Ableitkomponente in der Reifenmitte garantiert werden. Dies gilt insbesondere, wenn solche Reifen auch nur einen minimal geringeren Reifendruck als vorgeschrieben aufweisen. Daher ist der vorstehend beschriebene Aspekt der vorliegenden Erfindung hier besonders vorteilhaft.

Bevorzugt ist ein erfindungsgemäßes Verfahren wie vorstehend beschrieben oder wie vorstehend als bevorzugt beschrieben, wobei die erste Kautschukmischung einen spezifischen elektrischen Widerstand von höchstens 10¹² Ohm·cm bei 20 °C aufweist, bevorzugt höchstens 10¹⁰ Ohm·cm bei 20 °C, besonders bevorzugt höchstens 10⁸ Ohm·cm bei 20 °C. Solche Kautschukmischungen sind in dem Fachmann bekannt und weisen zumeist einen Rußanteil von 10 phr oder mehr auf.

Ein Vorteil des vorstehend beschriebenen Aspekts der vorliegenden Erfindung ist, dass insbesondere Kautschukmischungen mit den vorstehend beschriebenen spezifischen elektrischen Widerständen eine elektrostatische Aufladung noch besser vermeiden oder reduzieren.

Bevorzugt ist ein erfindungsgemäßes Verfahren wie vorstehend beschrieben oder wie vorstehend als bevorzugt beschrieben, wobei die zweite Kautschukmischung einen spezifischen elektrischen Widerstand von mindestens 10¹² Ohm·cm bei 20 °C aufweist, bevorzugt höchstens 10¹⁴ Ohm·cm bei 20 °C. Insbesondere für Fahrzeugluftreifen ohne elektrisch leitfähige Cap-Komponente ist eine effektive Ableitung der elektrostatischen Aufladung besonders wichtig. Solche Cap-Komponenten sind in dem Fachmann bekannt und weisen zumeist einen Silica-Anteil von 25 phr oder mehr auf.

Bevorzugt ist ein erfindungsgemäßes Verfahren wie vorstehend beschrieben oder wie vorstehend als bevorzugt beschrieben, wobei der Schritt B) des Verfahrens wie folgt lautet:
Leiten der in Schritt A) extrudierten Kautschukmischungen durch eine Führungseinheit einer Vorrichtung wie nachstehend beschrieben oder wie nachstehend als bevorzugt beschrieben, wobei bevorzugt die zweite Kautschukmischung durch mindestens einen Fließkanal für eine Cap-Komponente geführt wird, wobei die zwei Fließkanäle für Wing-Komponenten und der mindestens eine Fließkanal für eine Ableitkomponente bevorzugt so angeordnet sind, dass die erste Kautschukmischung aus einem einzigen Extruder in diese drei Fließkanäle gedrückt wird,
   und
Ausformen des Vorkautschukprofils mittels einer Endform-Einheit einer Vorrichtung zum Ausformen eines zwei Wingkomponenten und eine Ableitkomponente umfassenden Kautschukprofils, bevorzugt mittels einer Endform-Einheit einer Vorrichtung wie nachstehend beschrieben oder wie nachstehend als bevorzugt beschrieben, zu einem Kautschukprofil zumindest umfassend eine Cap-Komponente, zwei Wingkomponenten und mindestens eine Ableitkomponente., wobei die erste Kautschukmischung zu den zwei Wingkomponenten und der einen Ableitkomponente ausgeformt wird und einen spezifischen elektrischen Widerstand von höchstens 10¹² Ohm·cm bei 20 °C aufweist, wobei die zweite Kautschukmischung zu der Cap-Komponente ausgeformt wird.

Ein Vorteil des vorstehend beschriebenen Aspekts der vorliegenden Erfindung ist, dass durch die auf Splittung der ersten Kautschukmischung in den drei vorstehend beschriebenen Fließkanäle die Wing-Komponenten anders extrudiert werden können als die Ableitkomponente. Dies hat den Vorteil, dass die meist sehr filigranen Wing-Komponenten mit anderen Extrusionsparameter, wie zum Beispiel der Temperatur oder den Druck in dem jeweiligen Fließkanal, geleitet als die Ableitkomponente und ausgeformt werden können und somit weniger Abweichungen der der vordefinierten filigranen form auftreten.

Im Rahmen der vorliegenden Erfindung bezeichnet der Ausdruck "Fließkanäle für Wing-Komponenten" oder für andere Komponenten eines Laufstreifens solche Fließkanäle, durch die Kautschukmischungen zur Herstellung einer Wing-Komponente bzw. zur Herstellung anderer Komponenten eines Laufstreifens geleitet werden können.

Bevorzugt ist ein erfindungsgemäßes Verfahren wie vorstehend beschrieben oder wie vorstehend als bevorzugt beschrieben, wobei das Verhältnis des Durchsatzes der ersten Kautschukmischung durch die zwei Fließkanäle für Wing-Komponenten zu dem Durchsatz der ersten Kautschukmischung durch den mindestens einen Fließkanal für Ableitkomponenten im Bereich von 10:1 bis 1:5 liegt, bevorzugt im Bereich von 5:1 bis 1:1, wobei das Verhältnis des Durchsatzes der ersten Kautschukmischung durch die zwei Fließkanäle für Wing-Komponenten zu dem Durchsatz der dritten Kautschukmischung im Bereich von 1:1 bis 1:20 liegt, bevorzugt im Bereich von 1:2 bis 1:10. Bevorzugt ist die dritte Kautschukmischung zur Base-Komponente im resultierenden Kautschukprofil ausgeformt, wobei die zweite und/oder dritte Kautschukmischung einen spezifischen elektrischen Widerstand von mehr als 10¹⁴ Ohm·cm bei 20 °C aufweist.

Ein Vorteil des vorstehend beschriebenen Aspekts der vorliegenden Erfindung ist, dass durch das Verhältnis des Durchsatzes der ersten Kautschukmischung zu dem Durchsatz der dritten Kautschukmischung ein Kautschukprofil in Schritt B) ausgeformt wird, bei dem die Wing-Komponenten einen wesentlichen Teil der späteren Reifenaufstandsfläche des resultierenden Fahrzeugluftreifens bei dem empfohlenen Reifeninnenluftdruck und insbesondere bei einem niedrigeren Reifenluftdruck aufweisen. Ein weiterer Vorteil ist, dass die meist sehr filigranen Wing-Komponenten mit anderen Extrusionsparameter, wie zum Beispiel der Temperatur oder den Druck in dem jeweiligen Fließkanal, geleitet als die Basekomponente und ausgeformt werden können und somit weniger Abweichungen der der vordefinierten filigranen Form auftreten.

In besonders hohem Maße bevorzugt ist ein Verfahren wie vorstehend beschrieben, umfassen die folgenden Schritte:
A) Extrudieren von mindestens zwei Kautschukmischungen, wobei die mindestens zwei Kautschukmischungen zumindest eine erste Kautschukmischung und eine zweite Kautschukmischung aufweisen,
B) Leiten der in Schritt A) extrudierten Kautschukmischungen durch eine Führungseinheit einer Vorrichtung wie nachstehend beschrieben oder wie nachstehend als bevorzugt beschrieben oder wie nachstehend als besonders bevorzugt beschrieben, wobei die erste Kautschukmischung durch zwei Fließkanäle für Wing-Komponenten und durch mindestens einen Fließkanal für eine Ableitkomponente geführt wird und bevorzugt die zweite Kautschukmischung durch mindestens einen Fließkanal für eine Cap-Komponente geführt wird,
   und
   Ausformen des Vorkautschukprofils mittels einer Endform-Einheit einer Vorrichtung wie nachstehend beschrieben oder wie nachstehend als bevorzugt beschrieben oder wie nachstehend als besonders bevorzugt beschrieben zu einem Kautschukprofil zumindest umfassend eine Cap-Komponente, zwei Wingkomponenten und mindestens eine Ableitkomponente, wobei die erste Kautschukmischung zu den zwei Wingkomponenten und der einen Ableitkomponente ausgeformt wird und einen spezifischen elektrischen Widerstand von höchstens 10⁸ Ohm·cm bei 20 °C aufweist, wobei die zweite Kautschukmischung zu der Cap-Komponente ausgeformt wird,
C) Zuschneiden des ausgeformten Kautschukprofils und Auflegen des zugeschnitten Kautschukprofils mit weiteren Reifenbauteilen auf eine Reifenaufbautrommel,
D) Weiterverarbeiten des aufgelegten Kautschukprofils mit den besagten weiteren Reifenbauteilen auf der Reifenaufbautrommel, sodass ein Reifenrohling mit einem Laufstreifen mit mindestens zwei Wingkomponenten und einer Ableitkomponente entsteht,
E) Vulkanisieren des Reifenrohlings zu einem Fahrzeugluftreifen mit einem Laufstreifen umfassend mindestens zwei Wingkomponenten und eine Ableitkomponente, wobei die mindestens zwei Wingkomponenten und die Ableitkomponente aus der ersten Kautschukmischung bestehen,
wobei
- in Schritt A) eine dritte Kautschukmischung mit einem spezifischen elektrischen Widerstand von mindestens 10¹² Ohm·cm bei 20 °C extrudiert wird, wobei diese dritte Kautschukmischung in Schritt B) zusammen mit der ersten und zweiten Kautschukmischung zu einem Kautschukprofil ausgeformt wird, wobei die erste Kautschukmischung zu den zwei Wingkomponenten und der einen Ableitkomponente ausgeformt wird und die zweite Kautschukmischung zu der Cap-Komponente und die dritte Kautschukmischung zu der Base-Komponente ausgeformt wird,
- das Verhältnis des Durchsatzes der ersten Kautschukmischung durch die zwei Fließkanäle für Wing-Komponenten zu dem Durchsatz der dritten Kautschukmischung im Bereich von 1:2 bis 1:10 liegt,
   und
- das Verhältnis des Durchsatzes der ersten Kautschukmischung durch die zwei Fließkanäle für Wing-Komponenten zu dem Durchsatz der ersten Kautschukmischung durch den mindestens einen Fließkanal für Ableitkomponenten im Bereich von 5:1 bis 1:1.

Die vorstehend beschriebenen vorteilhaften Aspekte eines erfindungsgemäßen Verfahrens zur Herstellung eines Fahrzeugluftreifens gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zur Herstellung eines Fahrzeugluftreifens.

Die Erfindung betrifft auch eine Vorrichtung zur Durchführung eines erfindungsgemäßen Verfahrens, wobei die Vorrichtung bevorzugt zum Ausformen eines zwei Wingkomponenten und eine Ableitkomponente umfassenden Kautschukprofils geeignet ist, wobei die Vorrichtung bevorzugt umfasst:
- eine Endform-Einheit zum Ausformen von mindestens zwei Kautschukmischungen zu einem Kautschukprofil
   und
- eine Führungseinheit zum Leiten mindestens zweier Kautschukmischungen von mindestens zwei Extrudergehäusen zu der Endform-Einheit, wobei
   - die Führungseinheit dazu ausgelegt ist, im Zusammenwirken mit der Endform-Einheit aus mindestens zwei, in je einem Extrudergehäuse extrudierten Kautschukmischungen ein Kautschukprofil herzustellen,

- wobei die Führungseinheit
   - mindestens drei miteinander verbundenen Fließkanäle zum Führen von zwei Wingkomponenten und einer Ableitkomponente sowie
   - eine Grundfläche zum Verbinden mit den Extrudergehäusen und
   - eine der Grundfläche gegenüberliegende Kontaktfläche zum Überführen von Kautschukmischungen aus der Führungseinheit in die Endform-Einheit
   aufweist,
dadurch gekennzeichnet, dass
- die Grundfläche der Führungseinheit besonders bevorzugt einen gemeinsamen Eingang für die mindestens drei Fließkanäle für zwei Wing- und eine Ableitkomponente aufweist
   und
- die Kontaktfläche der Führungseinheit mindestens drei Ausgänge für die besagten drei Fließkanäle zum Führen von zwei Wingkomponenten und einer Ableitkomponente aufweist, wobei der Ausgang für die Ableitkomponente besonders bevorzugt räumlich zwischen den beiden Ausgängen für die Wing-Komponenten angeordnet ist.

Im Rahmen der vorliegenden Erfindung ist eine vorstehend beschriebene oder eine nachstehend als bevorzugt beschriebene Vorrichtung insbesondere eine Vorrichtung zur Durchführung eines vorstehend beschriebenen oder vorstehend als bevorzugt beschriebenen erfindungsgemäßen Verfahrens.

Im Rahmen der vorliegenden Erfindung umfasst der Ausdruck "Ableitkomponente eines Laufstreifens" insbesondere einen vorstehend beschriebenen BasePen oder einen sogenannten CCB-Strip. Grundsätzlich sind jedoch hierzu jegliche ausreichend elektrisch leitfähige Kautschukmischungen zur Reduzierung der elektrostatischen Aufladung wie vorstehend beschrieben geeignet, welche einen elektrischen Kontakt zwischen der Fahrbahn und der dem Fahrzeug herstellen können.

Im Rahmen der vorliegenden Erfindung umfasst der Ausdruck "Formeinheit" insbesondere eine Vorschablone mit Extruderköpfen. Bei der Herstellung von Kautschukprofilen werden häufig mehrere je eine Extrudergehäuse aufweisende Extruder mit einer einzigen Führungseinheit wie vorstehend oder nachstehend beschrieben so verbunden, dass durch jeden Extruder und somit durch jedes Extrudergehäuse eine Kautschukmischung mit einer bestimmten Kautschukmischungszusammensetzung extrudiert wird, wobei die final resultierende Kautschukmischung im Rahmen der vorliegenden Erfindung eine, in einem Extrudergehäuse extrudierte Kautschukmischung genannt wird.

Im Rahmen der vorliegenden Erfindung ist ein Extrudergehäuse insbesondere der Zylinder eines Extruders, in dem die Extruderschnecke die Kautschukmischung extrudieren kann. Im Rahmen der vorliegenden Erfindung beschreibt der Ausdruck "drei miteinander verbundenen Fließkanäle" insbesondere einen mehrteiligen Fließkanal, welcher auf Extruderseite eine Eintrittsöffnung des Fließkanals, auch Eingang genannt, und auf der Seite der Endform-Einheit drei Austrittsöffnungen des Fließkanals, auch Ausgänge genannt, aufweist.

Besonders bevorzugt ist eine erfindungsgemäße Vorrichtung wie vorstehend beschrieben oder wie vorstehend als bevorzugt beschrieben, wobei ein erster und ein zweiter der drei Ausgänge für Wing-Kautschukmischungen so an der Kontaktfläche der Führungseinheit angeordnet sind, dass durch diese zwei Ausgänge fließende Kautschukmischungen in der Endform-Einheit zu zwei separierten Wingkomponenten innerhalb des resultierenden Kautschukprofils ausgeformt werden.

Besonders bevorzugt ist auch eine erfindungsgemäße Vorrichtung wie vorstehend als besonders bevorzugt beschrieben, wobei einer oder der dritte der drei Ausgänge so an der Kontaktfläche der Führungseinheit angeordnet ist, dass durch diesen einen oder dritten Ausgang fließende Kautschukmischungen in der Endform-Einheit zu einer Ableitkomponente des resultierenden Kautschukprofils ausgeformt werden, wobei sich die Ableitkomponente des resultierenden Kautschukprofils bevorzugt zwischen den Wingkomponenten durch das resultierende Kautschukprofil hindurch erstreckt. Hierbei erstreckt sich die Ableitkomponente bevorzugt entlang der kürzesten Quererstreckung des Kautschukprofils, wobei die Haupterstreckung des Kautschukprofils entlang der Extrusionsrichtung oder Förderrichtung des Kautschukprofils in Form eines Endlosstreifens ist.

Ein Vorteil des vorstehend beschriebenen Aspekts der vorliegenden Erfindung ist, dass auf diese Weise sichergestellt werden kann, dass ein elektrischer Kontakt zwischen der Bodenaufstandsfläche der angeordneten Ableitkomponente und dem Fahrzeugrad und somit dem gesamten Fahrzeug mittig im Laufstreifen sichergestellt werden kann.

Bevorzugt ist eine erfindungsgemäße Vorrichtung wie vorstehend beschrieben oder wie vorstehend als bevorzugt beschrieben, wobei der Ausgang für die Ableitkomponente räumlich zwischen den beiden Ausgängen der zwei Wingkomponenten angeordnet ist.

Ein Vorteil des vorstehend beschriebenen Aspekts der vorliegenden Erfindung ist, dass der Fließkanal für die Ableitkomponente zwischen den beiden Fließkanälen der zwei Wingkomponenten auf diese Weise eine bessere Extrusion ermöglicht, bei der die Drücke der Kautschukmischung in dem Fließkanal für die Ableitkomponente um mindestens 20% reduzieren.

Bevorzugt ist eine erfindungsgemäße Vorrichtung wie vorstehend beschrieben oder wie vorstehend als bevorzugt beschrieben, wobei die Führungseinheit genau zwei Fließkanäle für Wing-Kautschukmischungen und mindestens einen Fließkanal für eine Ableitkomponente aufweist, welche in den einen Eingang an der Grundfläche der Führungseinheit münden, wobei die zwei Fließkanäle für Wing-Kautschukmischungen in die zwei Ausgänge für Wing-Komponenten führen und der dritte Fließkanal in einen Ausgang für eine Ableitkomponente führt
Bevorzugt ist eine erfindungsgemäße Vorrichtung wie vorstehend beschrieben oder wie vorstehend als bevorzugt beschrieben, wobei das Verhältnis der Gesamtaustrittsfläche der Ausgänge für Wing-Komponenten zu der Gesamtaustrittsfläche der Ausgänge für Ableitkomponenten im Bereich von 15:1 bis 1:5 liegt, bevorzugt im Bereich von 10:1 bis 1:1, besonders bevorzugt im Bereich von 10:1 bis 2:1.

Ein Vorteil des vorstehend beschriebenen Aspekts der vorliegenden Erfindung ist, dass die Wingkomponente das Verbauen des Laufstreifens an der Reifenbaumaschine ermöglicht und die Ableitkomponenten das elektrische Ableiten im fertigen Reifen ermöglicht.

Im Rahmen der vorliegenden Erfindung umfasst die Gesamtaustrittsfläche der Ausgänge für Wing-Komponenten einer erfindungsgemäßen Vorrichtung die gesamte Fläche, welche von den Rändern der Ausgänge der verschiedenen Fließkanäle für Wing-Komponenten umschlossen wird.

In besonders hohem Maße bevorzugt ist eine erfindungsgemäße Vorrichtung wie vorstehend beschrieben, umfassend:
- eine Endform-Einheit zum Ausformen von mindestens zwei Kautschukmischungen zu einem Kautschukprofil
   und
- eine vorstehend beschriebene Führungseinheit umfassend einen Extruderkopf und eine Vorschablone zum Leiten mindestens zweier Kautschukmischungen von mindestens zwei Extrudergehäusen zu der Endform-Einheit, wobei
   - die Führungseinheit dazu ausgelegt ist, im Zusammenwirken mit der Endform-Einheit aus mindestens zwei, in je einem Extrudergehäuse extrudierten Kautschukmischungen ein Kautschukprofil herzustellen,
   - die Führungseinheit
      - mindestens drei miteinander verbundenen Fließkanäle zum Führen von zwei Wingkomponenten und einer Ableitkomponente sowie
      - eine Grundfläche zum Verbinden mit den Extrudergehäusen und
      - eine der Grundfläche gegenüberliegende Kontaktfläche zum Überführen von Kautschukmischungen aus der Führungseinheit in die Endform-Einheit aufweist,
   - die Grundfläche der Führungseinheit einen gemeinsamen Eingang für die mindestens drei Fließkanäle für zwei Wing- und eine Ableitkomponente aufweist
      und
   - die Kontaktfläche der Führungseinheit mindestens drei Ausgänge für die besagten drei Fließkanäle zum Führen von zwei Wingkomponenten und einer Ableitkomponente aufweist,
   wobei
- der Ausgang für die Ableitkomponente räumlich zwischen den beiden Ausgängen der zwei Wingkomponenten angeordnet ist,
- ein erster und ein zweiter der drei Ausgänge für Wing-Kautschukmischungen so an der Kontaktfläche der Führungseinheit angeordnet sind, dass durch diese zwei Ausgänge fließende Kautschukmischungen in der Endform-Einheit zu Wingkomponenten des resultierenden Kautschukprofils ausgeformt werden,
- einer oder der dritte der drei Ausgänge für Wing-Kautschukmischungen so an der Kontaktfläche der Führungseinheit angeordnet ist, dass durch diesen einen oder dritten Ausgang fließende Kautschukmischungen in der Endform-Einheit zu einer Ableitkomponente des resultierenden Kautschukprofils ausgeformt werden, wobei sich die Ableitkomponente des resultierenden Kautschukprofils bevorzugt zwischen den Wingkomponenten durch das resultierende Kautschukprofil entlang der kürzesten Quererstreckung erstreckt,
- die Führungseinheit genau zwei Fließkanäle für Wing-Kautschukmischungen und mindestens einen Fließkanal für eine Ableitkomponente aufweist, welche in den einen Eingang an der Grundfläche der Führungseinheit münden, wobei die zwei Fließkanäle für Wing-Kautschukmischungen in die zwei Ausgänge für Wing-Komponenten führen und der dritte Fließkanal in einen Ausgang für eine Ableitkomponente führt,
   und
- das Verhältnis der Gesamtaustrittsfläche der Ausgänge für Wing-Komponenten zu der Gesamtaustrittsfläche der Ausgänge für Ableitkomponenten im Bereich von 10:1 bis 1:1 liegt.

Die vorstehend beschriebenen vorteilhaften Aspekte einer erfindungsgemäßen Vorrichtung und eines erfindungsgemäßen Verfahrens zur Herstellung eines Fahrzeugluftreifens gelten auch für sämtliche Aspekte eines nachstehend beschriebenen Fahrzeugluftreifens und die nachstehend diskutierten vorteilhaften Aspekte erfindungsgemäßer Fahrzeugluftreifen gelten entsprechend für sämtliche Aspekte einer erfindungsgemäßen Vorrichtung zum Ausformen eines zwei Wingkomponenten und eine Ableitkomponente umfassenden Kautschukprofils und eines erfindungsgemäßen Verfahrens zur Herstellung eines Fahrzeugluftreifens.

Die Erfindung offenbart auch einen Fahrzeugluftreifen herstellbar oder hergestellt nach eine erfindungsgemäßen Verfahren wie vorstehend beschrieben oder wie vorstehend als bevorzugt beschrieben und/oder umfassend einen Laufstreifen, wobei der Laufstreifen mindestens zwei Wingkomponenten und mindestens eine Ableitkomponente umfasst, wobei die mindestens zwei Wingkomponenten und die Ableitkomponente aus der gleichen Kautschukzusammensetzung bestehen, wobei das Massenverhältnis der Gesamtmasse der Wingkomponenten zu der Gesamtmasse der mindestens einen Ableitkomponente besonders bevorzugt im Bereich von 10:1 bis 1:5 liegt, ganz besonders bevorzugt im Bereich von 5:1 bis 1:1.

Ein Vorteil eines Fahrzeugluftreifens wie vorstehend beschrieben ist, dass auch in einer starken Kurvenlage des erfindungsgemäßen Fahrzeugluftreifens ein elektrischer Kontakt zur Fahrbahn sichergestellt ist und somit eine elektrisches Aufladen noch mehr verhindert wird als bei bereits bekannten Fahrzeugluftreifen.

Es ist eine Fahrzeugluftreifen wie vorstehend beschrieben oder wie vorstehend als bevorzugt beschrieben offenbart, wobei der Laufstreifen des Fahrzeugluftreifens keine Basekomponente umfasst oder eine Basekomponente mit einem spezifischen elektrischen Widerstand von höchstens 10¹² Ohm·cm bei 20 °C aufweist, besonders bevorzugt höchstens 10¹⁰ Ohm·cm bei 20 °C, ganz besonders bevorzugt höchstens 10⁸ Ohm·cm bei 20 °C.

Es ist eine Fahrzeugluftreifen wie vorstehend beschrieben oder wie vorstehend als bevorzugt beschrieben offenbart, wobei der Fahrzeugluftreifen ein Reifen mit einem Verhältnis von Reifenaufstandsfläche zur Seitenwandhöhe einer Seitenwand im Bereich von 7:1 bis 1:1 ist. Dies hat die vorstehend beschriebenen Vorteile für Reifen mit diesen Verhältnissen.

Im Rahmen der vorliegenden Erfindung umfasst die Reifenaufstandsfläche Fahrzeugluftreifens die gesamte Fläche eines Fahrzeugluftreifens, die beim standardmäßigen Gebrauch eines Fahrzeugluftreifens an einem Fahrzeug mit der Fahrbahn in Kontakt kommt.

Es ist eine Fahrzeugluftreifen wie vorstehend beschrieben oder wie vorstehend als bevorzugt beschrieben offenbart, wobei das Verhältnis der Querschnittsfläche im Radialquerschnitt des Fahrzeugluftriefens der Wingkomponenten zur Querschnittsfläche im Radialquerschnitt des Fahrzeugluftriefens der Basekomponente im Bereich von 1:1 bis 1:20 liegt, bevorzugt im Bereich von 1:2 bis 1:10.

Im Rahmen der vorliegenden Erfindung bezeichnet der Ausdruck "Querschnittsfläche im Radialquerschnitt" die gesamte Fläche eines senkrecht zur Umfangsrichtung verlaufenden Querschnitts eines Fahrzeugluftreifens.

Ein Vorteil des vorstehend beschriebenen Aspekts der ist, dass durch das Verhältnis der Querschnittsfläche im Radialquerschnitt der Wingkomponenten zur Querschnittsfläche im Radialquerschnitt der Basekomponente ein Fahrzeugluftreifen resultiert, bei dem die Wing-Komponenten einen wesentlichen Teil der Reifenaufstandsfläche bei dem für den Fahrzeugluftreifen empfohlenen Reifeninnenluftdruck und insbesondere bei einem niedrigeren Luftdruck ausmachen.

Die vorstehend beschriebenen vorteilhaften Aspekte einer erfindungsgemäßen Vorrichtung und eines erfindungsgemäßen Verfahrens zur Herstellung eines Fahrzeugluftreifens gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung zum Ausformen eines zwei Wingkomponenten und eine Ableitkomponente umfassenden Kautschukprofils und eines erfindungsgemäßen Verfahrens zur Herstellung eines Fahrzeugluftreifens.

Die Erfindung betrifft auch eine Verwendung einer vorstehend beschriebenen oder vorstehend als bevorzugt beschriebenen Vorrichtung, zur Herstellung eines Fahrzeugluftreifens mit einem Laufstreifen umfassend mindestens zwei Wingkomponenten und eine Ableitkomponente, wobei die mindestens zwei Wingkomponenten und die Ableitkomponente aus der gleichen Kautschukzusammensetzung bestehen und im gleichen Extruder extrudiert werden.

Bevorzugt ist eine Verwendung wie vorstehend beschrieben oder wie vorstehend als bevorzugt beschrieben, wobei der Laufstreifen des Fahrzeugluftreifens keine Basekomponente umfasst oder eine Basekomponente mit einem spezifischen elektrischen Widerstand von höchstens 10¹² Ohm·cm bei 20 °C aufweist, besonders bevorzugt höchstens 10¹⁰ Ohm·cm bei 20 °C, ganz besonders bevorzugt höchstens 10⁸ Ohm·cm bei 20 °C.

Bevorzugt ist eine Verwendung wie vorstehend beschrieben oder wie vorstehend als bevorzugt beschrieben, wobei die erste Kautschukmischung einen spezifischen elektrischen Widerstand von höchstens 10¹² Ohm·cm bei 20 °C aufweist, bevorzugt höchstens 10¹⁰ Ohm·cm bei 20 °C, besonders bevorzugt höchstens 10⁸ Ohm·cm bei 20 °C.

### Figurenbeschreibung:

- Figur 1:: Querschnittsansicht auf einen schematisch dargestellten Kautschukprofils zur Herstellung eines Laufstreifens eines erfindungsgemäßen Reifens;
- Figur 2:: perspektivische Ansicht auf eine erfindungsgemäße Vorrichtung.

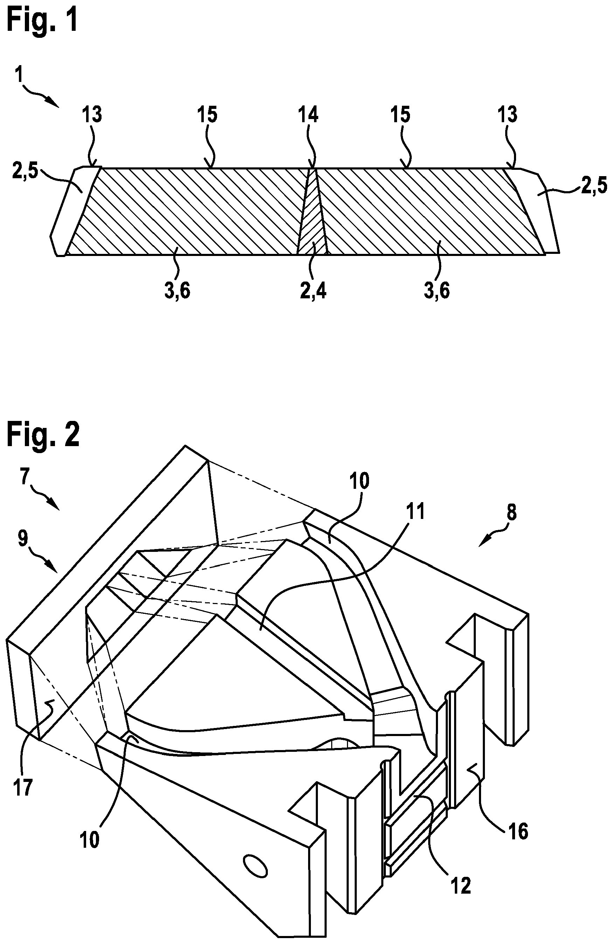

Figur 1 zeigt eine schematische Darstellung eines Querschnitts eines mittels eines erfindungsgemäßen Verfahrens hergestellten Kautschukprofils 1, wobei das Kautschukprofils 1 eine Ableitkomponente 4 und zwei Wing-Komponenten 5, welche jeweils aus einer ersten Kautschukmischung 2 hergestellt sind, umfasst und zusätzlich zwei weitere Cap-Komponente 6 aus einer zweiten Kautschukmischung 3 umfasst. Es sind aber auch Kautschukprofile mit zwei, drei, vier oder mehr als vier Ableitkomponenten denkbar, welche zwischen den Wing- und Ableitkomponenten 5, 7 in Figur 1 angeordnet wären, um den elektrischen Kontakt weiter zu erhöhen.

Sowohl die Cap-Komponente 6 weist eine Bodenaufstandsfläche 15 auf als auch die Ableitkomponente 4 eine Bodenaufstandsfläche 14 und die Wing-Komponenten 5 eine Bodenaufstandsfläche 13. Die Bodenaufstandsflächen 13, 14, 15 in Figur 1 bilden später die Reifenaufstandsfläche des resultierenden Fahrzeugluftreifens.

Figur 2 zeigt eine schematische Darstellung einer erfindungsgemäßen Vorrichtung zum Ausformen eines zwei Wingkomponenten 5 und eine Ableitkomponente 4 umfassenden Kautschukprofils 1, wobei die Vorrichtung 7 umfasst: eine Endform-Einheit 9 zum Ausformen von mindestens zwei Kautschukmischungen 2, 3 zu einem Kautschukprofil 1 und eine Führungseinheit 8 zum Leiten mindestens zweier Kautschukmischungen 2, 3 von mindestens zwei Extrudergehäusen zu der Endform-Einheit 9, wobei die Führungseinheit 8 dazu ausgelegt ist, im Zusammenwirken mit der Endform-Einheit 9 aus mindestens zwei, in je einem Extrudergehäuse extrudierten Kautschukmischungen 2, 3 ein Kautschukprofil 1 herzustellen, wobei die Führungseinheit 8 mindestens drei miteinander verbundenen Fließkanäle 10, 11 zum Führen von zwei Wingkomponenten 5 und einer Ableitkomponente 4 sowie eine Grundfläche 16 zum Verbinden mit den Extrudergehäusen und eine der Grundfläche 16 gegenüberliegende Kontaktfläche 17 zum Überführen von Kautschukmischungen 2, 3 aus der Führungseinheit 8 in die Endform-Einheit 9 aufweist, dadurch gekennzeichnet, dass die Grundfläche 16 der Führungseinheit 8 besonders bevorzugt einen gemeinsamen Eingang für die mindestens drei Fließkanäle 10, 11 für zwei Wing- und eine Ableitkomponente 5, 4 aufweist und die Kontaktfläche der Führungseinheit 8 mindestens drei Ausgänge für die besagten drei Fließkanäle 10, 11 zum Führen von zwei Wingkomponenten und einer Ableitkomponente 5, 4 aufweist, wobei der Ausgang für die Ableitkomponente 4 besonders bevorzugt räumlich zwischen den beiden Ausgängen für die Wing-Komponenten 5 angeordnet ist. Für ein besseres Verständnis wurde in Figur 2 ein Teil der Führungseinheit 8 mit ihren Fließkanälen 10, 11 nur durch gestrichelte Linien dargestellt, um den Verlauf der Fließkanäle 10, 11 hin zu Endform-Einheit 9 besser zu erkennen.

### Bezugszeichenliste:

- 1: Kautschukprofil zur Herstellung eines Laufstreifens eines Fahrzeugluftreifens
- 2: erste Kautschukmischung
- 3: zweite Kautschukmischung
- 4: Ableitkomponente
- 5: Wingkomponente
- 6: Cap-Komponente
- 7: Vorrichtung zum Ausformen eines zwei Wingkomponenten und eine Ableitkomponente umfassenden Kautschukprofils zu einem Kautschukprofil
- 8: Führungseinheit
- 9: Endform-Einheit
- 10: Fließkanäle für Wingkomponenten
- 11: Fließkanal für Ableitkomponente
- 12: Fließkanal für eine Cap-Komponente
- 13: Bodenaufstandsfläche der Ableitkomponente
- 14: Bodenaufstandsfläche der Wingkomponente
- 15: Bodenaufstandsfläche der Cap-Komponente
- 16: Grundfläche der Führungseinheit
- 17: Kontaktfläche der Führungseinheit

## Patentansprüche

1. Verfahren zur Herstellung eines Fahrzeugluftreifens, umfassend die folgenden Schritte:
A) Extrudieren von mindestens zwei Kautschukmischungen (2, 3), wobei die mindestens zwei Kautschukmischungen (2, 3) zumindest eine erste Kautschukmischung (2) und eine zweite Kautschukmischung (3) aufweisen,
B) Ausformen der in Schritt A) extrudierten Kautschukmischungen (2, 3) in einer Vorrichtung (7) zum Ausformen eines zwei Wingkomponenten (5) und eine Ableitkomponente (4) umfassenden Kautschukprofils zu einem Kautschukprofil zumindest umfassend eine Cap-Komponente (6), zwei Wingkomponenten (5) und mindestens eine Ableitkomponente (4),
wobei die in Schritt A) extrudierten Kautschukmischungen (2, 3) durch eine Führungseinheit (8) einer Vorrichtung (7) zum Ausformen eines zwei Wingkomponenten (5) und eine Ableitkomponente (4) umfassenden Vorkautschukprofils geleitet werden, wobei die erste Kautschukmischung (2) durch zwei Fließkanäle (10) für Wing-Komponenten (5) und durch mindestens einen Fließkanal (11) für eine Ableitkomponente (4) geführt wird und
Ausformen des Vorkautschukprofils mittels einer Endform-Einheit (9) einer Vorrichtung (7) zum Ausformen eines zwei Wingkomponenten (5) und eine Ableitkomponente (4) umfassenden Kautschukprofils (1) zu einem Kautschukprofil (1) zumindest umfassend eine Cap-Komponente (6), zwei Wingkomponenten (5) und mindestens eine Ableitkomponente (3),
wobei die erste Kautschukmischung (2) zu den zwei Wingkomponenten (5) und der einen Ableitkomponente (4) ausgeformt wird und einen spezifischen elektrischen Widerstand von höchstens 10¹² Ohm·cm bei 20 °C aufweist, wobei die zweite Kautschukmischung (3) zu der Cap-Komponente (6) ausgeformt wird,
C) Zuschneiden des ausgeformten Kautschukprofils (1) und Auflegen des zugeschnitten Kautschukprofils (1) mit weiteren Reifenbauteilen auf eine Reifenaufbautrommel,
D) Weiterverarbeiten des aufgelegten Kautschukprofils (1) mit den besagten weiteren Reifenbauteilen auf der Reifenaufbautrommel, sodass ein Reifenrohling mit einem Laufstreifen mit mindestens zwei Wingkomponenten (5) und einer Ableitkomponente (3) entsteht,
E) Vulkanisieren des Reifenrohlings zu einem Fahrzeugluftreifen mit einem Laufstreifen umfassend mindestens zwei Wingkomponenten (5) und eine Ableitkomponente (3), wobei die mindestens zwei Wingkomponenten (5) und die Ableitkomponente (3) aus der ersten Kautschukmischung (2) bestehen.

2. Verfahren nach Anspruch 1, wobei
- die erste Kautschukmischung (2) einen spezifischen elektrischen Widerstand von höchstens 10¹⁰ Ohm·cm bei 20 °C aufweist, bevorzugt höchstens 10⁸ Ohm·cm bei 20 °C,
und/oder
- die zweite Kautschukmischung (3) einen spezifischen elektrischen Widerstand von mindestens 10¹² Ohm·cm bei 20 °C aufweist, bevorzugt höchstens 10¹⁴ Ohm·cm bei 20 °C.

3. Verfahren nach Anspruch 1 oder Anspruch 2, wobei
- in Schritt B) keine der Kautschukmischungen zu einer Basekomponente in dem Kautschukprofil ausgeformt wird, wobei bevorzugt keine der Kautschukmischungen zu einer Basekomponente mit einem spezifischen elektrischen Widerstand von höchstens 10¹² Ohm·cm bei 20 °C ausgeformt wird, besonders bevorzugt höchstens 10¹⁰ Ohm·cm bei 20 °C, ganz besonders bevorzugt höchstens 10⁸ Ohm·cm bei 20 °C,
und/oder
- der in Schritt E) resultierende Fahrzeugluftreifen ein Reifen mit einem Verhältnis von Reifenaufstandsfläche zur Seitenwandhöhe einer Seitenwand im Bereich von 10:1 bis 1:1 ist.

4. Verfahren nach einem der vorangehenden Ansprüche, wobei der Schritt B) des Verfahrens wie folgt lautet:
Leiten der in Schritt A) extrudierten Kautschukmischungen (2, 3) durch eine Führungseinheit (8) einer Vorrichtung (7) wie in den Ansprüchen 6 bis 9 definiert, wobei bevorzugt die zweite Kautschukmischung (3) durch mindestens einen Fließkanal (12) für eine Cap-Komponente (6) geführt wird,
und Ausformen des Vorkautschukprofils mittels einer Endform-Einheit (9) einer Vorrichtung (7) zum Ausformen eines zwei Wingkomponenten (5) und eine Ableitkomponente (4) umfassenden Kautschukprofils (1), bevorzugt mittels einer Endform-Einheit (9) einer Vorrichtung (7) wie in den Ansprüchen 6 bis 9 definiert, zu einem Kautschukprofil (1) zumindest umfassend eine Cap-Komponente (6), zwei Wingkomponenten (5) und mindestens eine Ableitkomponente (3).

5. Verfahren nach Anspruch 4, wobei das Verhältnis des Durchsatzes der ersten Kautschukmischung (2) durch die zwei Fließkanäle (10) für Wing-Komponenten (5) zu dem Durchsatz der ersten Kautschukmischung (2) durch den mindestens einen Fließkanal für Ableitkomponenten im Bereich von 10:1 bis 1:5 liegt, bevorzugt im Bereich von 5:1 bis 1:1, wobei das Verhältnis des Durchsatzes der ersten Kautschukmischung (2) durch die zwei Fließkanäle (10) für Wing-Komponenten (5) zu dem Durchsatz der dritten Kautschukmischung im Bereich von 1:1 bis 1:20 liegt, bevorzugt im Bereich von 1:2 bis 1: 10.

6. Vorrichtung zur Durchführung eines Verfahrens nach den Ansprüchen 1 bis 5, wobei die Vorrichtung (7) umfasst:
- eine Endform-Einheit (9) zum Ausformen von mindestens zwei Kautschukmischungen (2, 3) zu einem Kautschukprofil (1)
und
- eine Führungseinheit (8) zum Leiten mindestens zweier Kautschukmischungen (2, 3) von mindestens zwei Extrudergehäusen zu der Endform-Einheit (9), wobei
- die Führungseinheit (8) dazu ausgelegt ist, im Zusammenwirken mit der Endform-Einheit (9) aus mindestens zwei, in je einem Extrudergehäuse extrudierten Kautschukmischungen (2, 3) ein Kautschukprofil (1) herzustellen,
- wobei die Führungseinheit (8)
- mindestens drei miteinander verbundenen Fließkanäle (10, 11) zum Führen von zwei Wingkomponenten (5) und einer Ableitkomponente (4) sowie
- eine Grundfläche zum Verbinden mit den Extrudergehäusen und
- eine der Grundfläche gegenüberliegende Kontaktfläche zum Überführen von Kautschukmischungen (2, 3) aus der Führungseinheit (8) in die Endform-Einheit (9) aufweist,
**dadurch gekennzeichnet, dass**
- die Grundfläche der Führungseinheit (8) besonders bevorzugt einen gemeinsamen Eingang für die mindestens drei Fließkanäle (10, 11) für zwei Wing- und eine Ableitkomponente (5, 4) aufweist
und
- die Kontaktfläche der Führungseinheit (8) mindestens drei Ausgänge für die besagten drei Fließkanäle (10, 11) zum Führen von zwei Wingkomponenten und einer Ableitkomponente (5, 4) aufweist, wobei der Ausgang für die Ableitkomponente (4) besonders bevorzugt räumlich zwischen den beiden Ausgängen für die Wing-Komponenten (5) angeordnet ist.

7. Vorrichtung nach Anspruch 6, wobei einer oder der dritte der drei Ausgänge so an der Kontaktfläche der Führungseinheit (8) angeordnet ist, dass durch diesen einen oder dritten Ausgang fließende Kautschukmischungen in der Endform-Einheit (9) zu einer Ableitkomponente (4) des resultierenden Kautschukprofils (1) ausgeformt werden, wobei sich die Ableitkomponente (4) des resultierenden Kautschukprofils (1) bevorzugt zwischen den Wingkomponenten (3) durch das resultierende Kautschukprofil (1) hindurch erstreckt.

8. Vorrichtung nach einem der vorangehenden Ansprüche 6 bis 7, wobei die Führungseinheit (8) genau zwei Fließkanäle (10) für Wing-Kautschukmischungen (5) und mindestens einen Fließkanal (11) für eine Ableitkomponente (4) aufweist, welche in den einen Eingang an der Grundfläche der Führungseinheit (8) münden, wobei die zwei Fließkanäle (19) für Wingkomponenten (5) in die zwei Ausgänge für Wing-Komponenten (3) führen und der dritte Fließkanal (11) in einen Ausgang für eine Ableitkomponente (4) führt.

9. Vorrichtung nach einem der vorangehenden Ansprüche 6 bis 8, wobei das Verhältnis der Gesamtaustrittsfläche der Ausgänge für Wing-Komponenten (5) zu der Gesamtaustrittsfläche der Ausgänge für Ableitkomponenten (4) im Bereich von 15:1 bis 1:5 liegt, bevorzugt im Bereich von 10:1 bis 1: 1, besonders bevorzugt im Bereich von 10:1 bis 2:1.

10. Verwendung einer Vorrichtung nach einem der vorangehenden Ansprüche 6 bis 9 zur Herstellung eines Fahrzeugluftreifens mit einem Laufstreifen umfassend mindestens zwei Wingkomponenten (5) und eine Ableitkomponente (4), wobei die mindestens zwei Wingkomponenten (5) und die Ableitkomponente (4) aus der gleichen Kautschukzusammensetzung (2) bestehen und im gleichen Extruder extrudiert werden.

11. Verwendung nach Anspruch 10, wobei
- die zwei Wingkomponenten (5) und eine Ableitkomponente (4) einen spezifischen elektrischen Widerstand von höchstens 10¹² Ohm·cm bei 20 °C aufweist, bevorzugt höchstens 10¹⁰ Ohm·cm bei 20 °C, besonders bevorzugt höchstens 10⁸ Ohm·cm bei 20 °C,
und/oder
- der Laufstreifen des Fahrzeugluftreifens keine Basekomponente umfasst oder eine Basekomponente mit einem spezifischen elektrischen Widerstand von höchstens 10¹² Ohm·cm bei 20 °C aufweist, besonders bevorzugt höchstens 10¹⁰ Ohm·cm bei 20 °C, ganz besonders bevorzugt höchstens 10⁸ Ohm·cm bei 20 °C.

## Claims

1. Method for producing a pneumatic vehicle tyre, comprising the following steps:
A) extruding at least two rubber compounds (2, 3), the at least two rubber compounds (2, 3) comprising at least a first rubber compound (2) and a second rubber compound (3),
B) moulding the rubber compounds (2, 3) extruded in step A) in a device (7) for moulding a rubber profile comprising two wing components (5) and a dissipating component (4) into a rubber profile at least comprising a cap component (6), two wing components (5) and at least one dissipating component (4),
the rubber compounds (2, 3) extruded in step A) being conducted through a guiding unit (8) of a device (7) for moulding a preliminary rubber profile comprising two wing components (5) and a dissipating component (4), the first rubber compound (2) being guided through two flow channels (10) for wing components (5) and through at least one flow channel (11) for a dissipating component (4) and moulding the preliminary rubber profile by means of a final-mould unit (9) of a device (7) for moulding a rubber profile (1) comprising two wing components (5) and a dissipating component (4) into a rubber profile (1) at least comprising a cap component (6), two wing components (5) and at least one dissipating component (3),
the first rubber compound (2) being moulded into the two wing components (5) and the one dissipating component (4) and having a resistivity of at most 10¹² ohms·cm at 20°C, the second rubber compound (3) being moulded into the cap component (6),
C) cutting the moulded rubber profile (1) to size and placing the cut-to-size rubber profile (1) with further tyre components onto a tyre building drum,
D) further processing the placed-on rubber profile (1) with the said further tyre components on the tyre building drum, so that a green tyre with a tread comprising at least two wing components (5) and a dissipating component (3) is created,
E) vulcanizing the green tyre to form a pneumatic vehicle tyre with a tread comprising at least two wing components (5) and a dissipating component (3), the at least two wing components (5) and the dissipating component (3) consisting of the first rubber compound (2).

2. Method according to Claim 1,
- the first rubber compound (2) having a resistivity of at most 10¹⁰ ohms·cm at 20°C, preferably at most 10⁸ ohms·cm at 20°C,
and/or
- the second rubber compound (3) having a resistivity of at least 10¹² ohms·cm at 20°C, preferably at most 10¹⁴ ohms·cm at 20°C.

3. Method according to Claim 1 or Claim 2,
- in step B) none of the rubber compounds being moulded into a base component in the rubber profile 1, preferably none of the rubber compounds being moulded into a base component with a resistivity of at most 10¹² ohms·cm at 20°C, particularly preferably at most 10¹⁰ ohms·cm at 20°C, most particularly preferably at most 10⁸ ohms·cm at 20°C,
and/or
- the pneumatic vehicle tyre resulting in step E) being a tyre with a ratio of tyre contact area to sidewall height of a sidewall in the range from 10:1 to 1:1.

4. Method according to one of the preceding claims, step B) of the method being as follows:
conducting the rubber compounds (2, 3) extruded in step A) through a guiding unit (8) of a device (7) as defined in Claims 6 to 9,
preferably the second rubber compound (3) being guided through at least one flow channel (12) for a cap component (6),
and moulding the preliminary rubber profile by means of a final-mould unit (9) of a device (7) for moulding a rubber profile (1) comprising two wing components (5) and a dissipating component (4), preferably by means of a final-mould unit (9) of a device (7) as defined in Claims 6 to 9, into a rubber profile (1) at least comprising a cap component (6), two wing components (5) and at least one dissipating component (3).

5. Method according to Claim 4, the ratio of the throughput of the first rubber compound (2) through the two flow channels (10) for wing components (5) to the throughput of the first rubber compound (2) through the at least one flow channel for dissipating components lying in the range from 10:1 to 1:5, preferably in the range from 5:1 to 1:1, the ratio of the throughput of the first rubber compound (2) through the two flow channels (10) for wing components (5) to the throughput of the third rubber compound lying in the range from 1:1 to 1:20, preferably in the range from 1:2 to 1:10.

6. Device for carrying out a method according to Claims 1 to 5, the device (7) comprising:
- a final-mould unit (9) for moulding at least two rubber compounds (2, 3) into a rubber profile (1)
and
- a guiding unit (8) for conducting at least two rubber compounds (2, 3) from at least two extruder barrels to the final-mould unit (9), wherein
- the guiding unit (8) is designed to act together with the final-mould unit (9) to produce a rubber profile (1) from at least two rubber compounds (2, 3) each extruded in an extruder barrel,
- the guiding unit (8) having
- at least three interconnected flow channels (10, 11) for guiding two wing components (5) and a dissipating component (4) and also
- a base area for connecting to the extruder barrels and
- a contact area, opposite the base area, for transferring rubber compounds (2, 3) from the guiding unit (8) into the final-mould unit (9),
**characterized in that**
- the base area of the guiding unit (8) particularly preferably has a common entry for the at least three flow channels (10, 11) for two wing components and a dissipating component (5, 4)
and
- the contact area of the guiding unit (8) has at least three exits for the said three flow channels (10, 11) for guiding two wing components (5) and a dissipating component (5, 4), the exit for the dissipating component (4) particularly preferably being arranged spatially between the two exits for the wing components (5).

7. Device according to Claim 6, one or the third of the three exits being arranged at the contact area of the guiding unit (8) such that rubber compounds flowing through this one or third exit are moulded in the final-mould unit (9) into a dissipating component (4) of the resulting rubber profile (1), the dissipating component (4) of the resulting rubber profile (1) preferably extending through the resulting rubber profile (1) between the wing components (3).

8. Device according to either of the preceding Claims 6 and 7, the guiding unit (8) having precisely two flow channels (10) for wing rubber compounds (5) and at least one flow channel (11) for a dissipating component (4), which merge into the one entry at the base area of the guiding unit (8), the two flow channels (19) for wing components (5) leading into the two exits for wing components (3) and the third flow channel (11) leading into an exit for a dissipating component (4).

9. Device according to one of the preceding Claims 6 to 8, the ratio of the overall outlet area of the exits for wing components (5) to the overall outlet area of the exits for dissipating components (4) lying in the range from 15:1 to 1:5, preferably in the range from 10:1 to 1:1, particularly preferably in the range from 10:1 to 2:1.

10. Use of a device according to one of the preceding Claims 6 to 9 for producing a pneumatic vehicle tyre with a tread comprising at least two wing components (5) and a dissipating component (4), the at least two wing components (5) and the dissipating component (4) consisting of the same rubber composition (2) and being extruded in the same extruder.

11. Use according to Claim 10,
- the two wing components (5) and one dissipating component (4) having a resistivity of at most 10¹² ohms·cm at 20°C, preferably at most 10¹⁰ ohms·cm at 20°C, particularly preferably at most 10⁸ohms·cm at 20°C,
and/or
- the tread of the pneumatic vehicle tyre not comprising a base component or having a base component with a resistivity of at most 10¹² ohms·cm at 20°C, particularly preferably at most 10¹⁰ohms·cm at 20°C, most particularly preferably at most 10⁸ ohms·cm at 20°C.

## Revendications

1. Procédé de fabrication d'un pneumatique pour véhicule, comprenant les étapes suivantes :
A) extrusion d'au moins deux mélanges de caoutchouc (2, 3), les au moins deux mélanges de caoutchouc (2, 3) comprenant au moins un premier mélange de caoutchouc (2) et un deuxième mélange de caoutchouc (3),
B) formage des mélanges de caoutchouc (2, 3) extrudés à l'étape A) dans un dispositif (7) pour former un profilé en caoutchouc comprenant deux composants en ailes (5) et un composant de dissipation (4) en un profilé en caoutchouc comprenant au moins un composant de chapeautage (6), deux composants en ailes (5) et au moins un composant de dissipation (4),
les mélanges de caoutchouc (2, 3) extrudés à l'étape A) étant guidés à travers une unité de guidage (8) d'un dispositif (7) pour former un pré-profilé en caoutchouc comprenant deux composants en ailes (5) et un composant de dissipation (4), le premier mélange de caoutchouc (2) étant guidé à travers deux canaux d'écoulement (10) pour des composants en ailes (5) et à travers au moins un canal d'écoulement (11) pour un composant de dissipation (4), et
le formage du pré-profilé en caoutchouc au moyen d'une unité (9) de formage final d'un dispositif (7) pour le formage d'un profilé en caoutchouc (1) comprenant deux composants en ailes (5) et un composant de dissipation (4) en un profilé en caoutchouc (1) comprenant au moins un composant de chapeautage (6), deux composants en ailes (5) et au moins un composant de dissipation (3),
le premier mélange de caoutchouc (2) étant formé en les deux composants en ailes (5) et le composant de dissipation (4), et présentant une résistance électrique spécifique d'au plus 10¹² Ohm·cm à 20°C, le deuxième mélange de caoutchouc (3) étant formé en le composant de chapeautage (6),
C) découpe du profilé en caoutchouc formé (1) et pose du profilé en caoutchouc découpé (1) avec d'autres composants du pneumatique sur un tambour de confection de pneumatiques,
D) traitement ultérieur du profilé en caoutchouc (1) posé avec lesdits autres composants du pneumatique sur le tambour de confection du pneumatique, de manière à obtenir une ébauche de pneumatique avec une bande de roulement comportant au moins deux composants en ailes (5) et un composant de dissipation (3),
E) vulcanisation de l'ébauche de pneumatique en un pneumatique pour véhicule avec une bande de roulement comprenant au moins deux composants en ailes (5) et un composant de dissipation (3), les au moins deux composants en ailes (5) et le composant de dissipation (3) étant constitués par le premier mélange de caoutchouc (2).

2. Procédé selon la revendication 1, dans lequel
- le premier mélange de caoutchouc (2) présente une résistance électrique spécifique d'au plus 10¹⁰ Ohm·cm à 20°C, de préférence d'au plus 10⁸ Ohm·cm à 20°C,
et/ou
- le deuxième mélange de caoutchouc (3) présente une résistance électrique spécifique d'au moins 10¹² Ohm·cm à 20°C, de préférence d'au plus 10¹⁴ Ohm·cm à 20°C.

3. Procédé selon la revendication 1 ou la revendication 2, dans lequel
- à l'étape B), aucun des mélanges de caoutchouc n'est transformé en un composant de base dans le profilé en caoutchouc (1), de préférence aucun des mélanges de caoutchouc n'est transformé en un composant de base présentant une résistance électrique spécifique d'au plus 10¹² Ohm·cm à 20°C, de façon encore préférée d'au plus 10¹⁰ Ohm-cm à 20°C, tout particulièrement d'au plus 10⁸ Ohm-cm à 20°C,
et/ou
- le pneumatique de véhicule résultant de l'étape E) est un pneumatique présentant un rapport entre la surface de contact du pneumatique et la hauteur d'un flanc compris entre 10:1 et 1:1.

4. Procédé selon l'une des revendications précédentes, dans lequel l'étape B) du procédé est la suivante :
guider les mélanges de caoutchouc (2, 3) extrudés à l'étape A) à travers une unité de guidage (8) d'un dispositif (7) tel que défini dans les revendications 6 à 9,
de préférence, le deuxième mélange de caoutchouc (3) étant guidé à travers au moins un canal d'écoulement (12) pour un composant de chapeautage (6),
et former le pré-profilé en caoutchouc au moyen d'une unité (9) de formage final d'un dispositif (7) pour former un profilé en caoutchouc (1) comprenant deux composants en ailes (5) et un composant de dissipation (4), de préférence au moyen d'une unité (9) de formage final d'un dispositif (7) tel que défini dans les revendications 6 à 9, en un profilé en caoutchouc (1) comprenant au moins un composant de chapeautage (6), deux composants en ailes (5) et au moins un composant de dissipation (3).

5. Procédé selon la revendication 4, dans lequel le rapport entre le débit du premier mélange de caoutchouc (2) à travers les deux canaux d'écoulement (10) pour les composants en ailes (5) et le débit du premier mélange de caoutchouc (2) à travers ledit au moins un canal d'écoulement pour les composants de dissipation est dans une gamme allant de 10:1 à 1:5, de préférence dans une gamme allant de 5:1 à 1:1, le rapport entre le débit du premier mélange de caoutchouc (2) à travers les deux canaux d'écoulement (10) pour les composants en ailes (5) et le débit du troisième mélange de caoutchouc étant dans une gamme allant de 1:1 à 1:20, de préférence dans une gamme allant de 1:2 à 1:10.

6. Dispositif pour la mise en oeuvre d'un procédé selon les revendications 1 à 5, le dispositif (7) comprenant :
- une unité de formage final (9) pour le formage d'au moins deux mélanges de caoutchouc (2, 3) en un profilé en caoutchouc (1),
et
- une unité de guidage (8) pour guider au moins deux mélanges de caoutchouc (2, 3) depuis au moins deux corps d'extrudeuse vers l'unité de formage final (9),
- l'unité de guidage (8) est conçue pour fabriquer, en coopération avec l'unité de formage final (9), un profilé en caoutchouc (1) à partir d'au moins deux mélanges de caoutchouc (2, 3) extrudés chacun dans un corps d'extrudeuse,
- l'unité de guidage (8) présentant
- au moins trois canaux d'écoulement (10, 11) reliés entre eux pour guider deux composants en ailes (5) et un composant de dissipation (4) ainsi que
- une surface de base pour la connexion avec les corps d'extrudeuse et
- une surface de contact opposée à la surface de base pour transférer les mélanges de caoutchouc (2, 3) de l'unité de guidage (8) dans l'unité de formage final (9),
**caractérisé en ce que**
- la surface de base de l'unité de guidage (8) présente de manière particulièrement préférée une entrée commune pour les au moins trois canaux d'écoulement (10, 11) pour deux composants en ailes et un composant de dissipation (5, 4),
et
- la surface de contact de l'unité de guidage (8) présente au moins trois sorties pour lesdits trois canaux d'écoulement (10, 11) pour le guidage de deux composants en ailes et d'un composant de dissipation (5, 4), la sortie pour le composant de dissipation (4) étant, de manière particulièrement préférée, agencée dans l'espace entre les deux sorties pour les composants en ailes (5).

7. Dispositif selon la revendication 6, dans lequel une des trois sorties, ou la troisième de ces sorties, est agencée sur la surface de contact de l'unité de guidage (8) de telle sorte que des mélanges de caoutchouc s'écoulant à travers cette dite une sortie ou cette troisième sortie sont formés dans l'unité de formage final (9) en un composant de dissipation (4) du profilé en caoutchouc (1) résultant, le composant de dissipation (4) du profilé en caoutchouc (1) résultant s'étendant de préférence entre les composants en ailes (3) à travers le profilé en caoutchouc (1) résultant.

8. Dispositif selon l'une des revendications 6 à 7 précédentes, dans lequel l'unité de guidage (8) présente exactement deux canaux d'écoulement (10) pour des mélanges de caoutchouc pour ailes (5) et au moins un canal d'écoulement (11) pour un composant de dissipation (4), qui débouchent dans l'une des entrées sur la surface de base de l'unité de guidage (8), les deux canaux d'écoulement (19) pour les composants en ailes (5) menant dans les deux sorties pour les composants en ailes (3) et le troisième canal d'écoulement (11) menant dans une sortie pour un composant de dissipation (4).

9. Dispositif selon l'une des revendications précédentes 6 à 8, dans lequel le rapport entre la surface totale de sortie des sorties pour composants en ailes (5) et la surface totale de sortie des sorties pour composants de dissipation (4) est compris dans une gamme allant de 15:1 à 1:5, de préférence dans une gamme allant de 10:1 à 1:1, de manière particulièrement préférée dans une gamme allant de 10:1 à 2:1.

10. Utilisation d'un dispositif selon l'une des revendications précédentes 6 à 9 pour la fabrication d'un pneumatique de véhicule avec une bande de roulement comprenant au moins deux composants en ailes (5) et un composant de dissipation (4), les au moins deux composants en ailes (5) et le composant de dissipation (4) étant constitués de la même composition de caoutchouc (2) et étant extrudés dans la même extrudeuse.

11. Utilisation selon la revendication 10, dans laquelle
- les deux composants en ailes (5) et un composant de dissipation (4) présentent une résistance électrique spécifique d'au plus 10¹² Ohm·cm à 20°C, de préférence d'au plus 10¹⁰ Ohm·cm à 20°C, de manière particulièrement préférée d'au plus 10⁸ Ohm·cm à 20°C,
et/ou
- la bande de roulement du pneumatique pour véhicule ne comprend pas de composant de base ou présente un composant de base ayant une résistance électrique spécifique d'au plus 10¹² Ohm·cm à 20°C, de préférence d'au plus 10¹⁰ Ohm·cm à 20°C, de manière tout à fait préférée d'au plus 10⁸ Ohm·cm à 20°C.
